# EUROPEAN PATENT SPECIFICATION

(11) **EP 4 177 173 B1**
(45) Date of publication and mention of the grant of the patent: **12.02.2025**
(21) Application number: 22206045.1
(22) Date of filing: 08.11.2022
(51) Int. Cl.: B64U 10/20, B64U 10/25, A01G 15/00, F42B 12/36, F42B 15/01, F42B 15/08, B64U 101/18, B64U 101/35

(54) **A DEVICE FOR UNMANNED AERIAL VEHICLE TO INSTALL RAINFALL CATALYTIC BOMB**
VORRICHTUNG FÜR UNBEMANNTES LUFTFAHRZEUG ZUR INSTALLATION EINER KATALYTISCHEN NIEDERSCHLAGSBOMBE
DISPOSITIF POUR VÉHICULE AÉRIEN SANS PILOTE POUR INSTALLER UNE BOMBE CATALYTIQUE DE PLUIE

(30) Priority: 08.11.2021 CN 202122720091 U
(43) Date of publication of application: 10.05.2023
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- CN-A- 1 586 993
- CN-A- 107 158 602
- US-A1- 2017 217 587

## Description

### Technical Field

The invention relates to an unmanned aerial vehicle application and artificial rainfall technical field, and especially relates to a system to install a cannonball for artificial precipitation to an unmanned aerial vehicle.

### Background

The existing artificial rainfall modes comprises two modes, one is human-controlled plane and the other one is unmanned aerial vehicle, both loading rainfall catalyst or cannonball for artificial precipitation. For human-controlled plane, it needs a human to sow the rainfall catalyst, the artillery or rocket rains. It needs professional pilots to operate the aircraft, it needs special take-off and landing runway, the operation is complex, it has high requirement on the field, and it can not work in complex weather, the artillery and rocket operation area is small, the efficiency is low and the cost is high.

A common unmanned aerial vehicle carries a rainfall catalyst to fly into an effective cloud layer for rainfall, and due to the fact that the environment in accumulated rain clouds is extremely severe, e.g. strong convection, thunderstorm and lightning stroke, the problems of out-of-control air crash accidents, artificial rainfall failure or low efficiency are prone to occurring. CN 1 586 993 A relates to a miniature unmanned aircraft provided with a launching frame rigidly coupled to the lower side of the fuselage, which comprises a cylindrical catalytic device, which can be a silver iodide end burner or other catalyst end burner. CN 107 158 602 A relates to an unmanned aerial vehicle, having a launching device (for launching rescue supplies or fire-fighting bombs) rigidly coupled thereto. US 2017 217 587 A1 relates to an airborne weather modification device, that may burn or eject a weather modification composition, to create a dispersant to be directed towards a target cloud.

### Summary of the Invention

The invention aims to provide a system to install a cannonball for artificial precipitation to an unmanned aerial vehicle , which solves the problems that an existing common unmanned aerial vehicle carrying a cannonball for artificial precipitation is prone to failure and low in efficiency. Thereby, the unmanned aerial vehicle does not need to enter effective rainfall clouds, the unmanned aerial vehicle can safely operate to reduce the accident rate, and the operation is simple, and the rainfall cost is low.

To fulfill the purpose, it is provided a system to install a cannonball for artificial precipitation to an unmanned aerial vehicle, having the features defined in claim 1. Further preferred embodiments are defined in the dependent claims.

The beneficial effects of the invention are as follows:
The invention claims a system to install a cannonball for artificial precipitation to an unmanned aerial vehicle , using the unmanned aerial vehicle for carrying the cannonball for artificial precipitation. The unmanned aerial vehicle does not need to enter into the cloud layer, while the cannonball for artificial precipitation can be entering into the cloud layer through the soft lock. The unmanned aerial vehicle can reduce accident rate, the operation is simple, and the rainfall cost is low.

In the invention, the cylinder of the cannonball for artificial precipitation is provided with a first sensor, the position of the cannonball for artificial precipitation can be accurately monitored in real time, it is convenient to accurately release the cannonball for artificial precipitation and accurately detonate the cannonball for artificial precipitation.

The invention is provided with a wing surface on the cylinder of the cannonball for artificial precipitation, which is convenient for controlling the stability of the projectile body of the cylinder of the cannonball for artificial precipitation itself, especially after the cylinder of the cannonball for artificial precipitation enters the cloud layer, because the cloud layer inside is possible to have strong convection phenomenon, the wing surface can control and adjust the posture of the cylinder of the cannonball for artificial precipitation, and it is stable, convenient for acquiring the accurate posture of the cylinder of the cannonball for artificial precipitation for the throwing success rate and throwing efficiency.

### Brief Description of the Figures

FIG. 1 is a schematic diagram of a release state of the soft lock of the system to install the cannonball for artificial precipitation to the unmanned aerial vehicle according to the invention;
FIG. 2 is a state schematic diagram before releasing of the soft lock of the system to install the cannonball for artificial precipitation to the unmanned aerial vehicle according to the invention;
FIG. 3 is a structure schematic diagram of the cannonball for artificial precipitation of the system to install the cannonball for artificial precipitation to the unmanned aerial vehicle according to the invention.

In the drawings:
1. unmanned aerial vehicle; 2.cannonball for artificial precipitation; 3. cylinder; 4. soft lock; 5. second sensor; 6. first sensor; 7. wing surface.

### Detailed Description

The invention will be further described in detail with reference to the accompanying drawings and examples. It is to be understood that the specific embodiment described herein is only used for the present invention, but is not the limit of the present invention. In addition, it should be noted that, in order to facilitate description, the accompanying drawings only show part rather than all of the structure associated with the invention.

The claimed invention is defined by the appended claims.

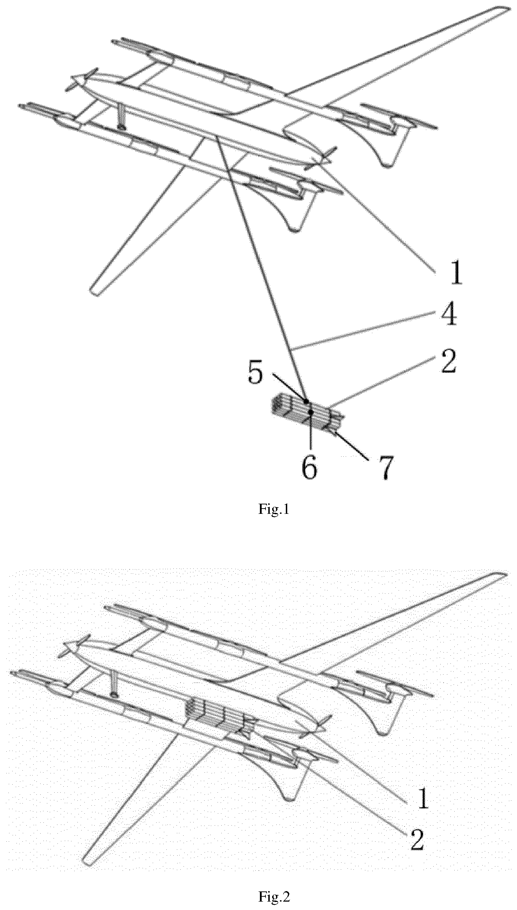

The invention provides a system to install a cannonball for artificial precipitation to an unmanned aerial vehicle, as shown in FIG. 1 to FIG. 3, comprising an unmanned aerial vehicle 1, a cannonball for artificial precipitation 2 and a cylinder 3, the unmanned aerial vehicle 1 connects the cannonball for artificial precipitation 2 through the soft lock 4. In the initial state, the cannonball for artificial precipitation 2 is detachably connected to the unmanned aerial vehicle 1; in the releasing state, the cannonball for artificial precipitation 2 is suspended below the unmanned aerial vehicle 1 through the soft lock 4. Wherein, the cannonball for artificial precipitation 2 is multiple and arranged in the cylinder 3. The cylinder 3 is further provided with a first sensor 6, and provided with a wing surface 7, which is multiple and is arranged on one end of the long shaft direction of the cylinder 3, the soft lock 4 connects on the other end of the long shaft direction of the cylinder 3.

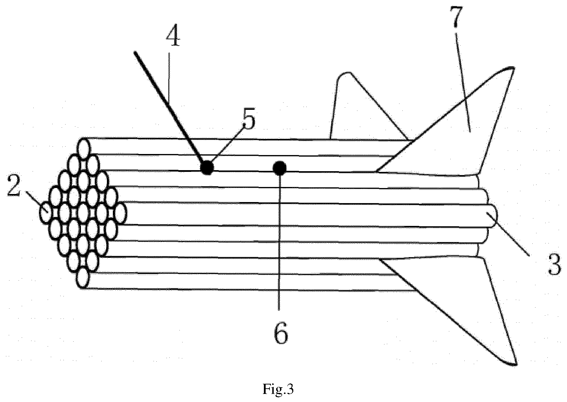

Referring to fig. 3, the system to install the cannonball for artificial precipitation to the unmanned aerial vehicle provided in the invention uses an unmanned aerial vehicle 1 to carry the cannonball for artificial precipitation 2 for rainfall, according to the pre-measured position of a cloud system, a flight line of the unmanned aerial vehicle 1 is designed and the unmanned aerial vehicle 1 flies into the upper space of the cloud system, then the cannonball for artificial precipitation 2 is released through a soft lock 4, and the position of the cannonball for artificial precipitation 2 is detected through a first sensor 6, when the detection result shows that the cannonball for artificial precipitation 2 reaches the cloud system or is positioned above the cloud system for a certain distance, then the cannonball for artificial precipitation 2 is released through the soft lock 4 and detonated, and the rainfall is implemented. It can be seen that in the process of implementing rainfall by detonating the cannonball for artificial precipitation 2, the unmanned aerial vehicle 1 does not need to enter the cloud system, the unmanned aerial vehicle 1 can be safely operated to reduce the accident rate, the operation is simple, the rainfall cost is low, and the precise position detonation of the cannonball for artificial precipitation 2 is realized. Therefore, in the invention, the position of the cannonball for artificial precipitation 2 can be accurately monitored in real time by arranging the first sensor 6 at the cylinder 3, so that the cannonball for artificial precipitation 2 can be conveniently and accurately thrown in and the cannonball for artificial precipitation 2 can be conveniently and accurately detonated. In the invention, the wing surfaces 7 and the soft lock 4 are respectively arranged at two ends of the long shaft direction of the cylinder 3, so that the stability of the cannonball for artificial precipitation 2 is convenient to control, for example, the posture of the cannonball for artificial precipitation 2 is adjusted by adjusting the length of the soft lock 4, or the posture of the cannonball for artificial precipitation 2 is adjusted by controlling the wing surfaces 7 through the steering engine, especially, after the cannonball for artificial precipitation 2 enters a cloud layer, because strong convection and other phenomena possibly exist in the cloud layer or a cloud system, the posture stability of the cannonball for artificial precipitation 2 can be controlled and adjusted through the wing surfaces 7, the accurate releasing of the cannonball for artificial precipitation 2 is convenient to realize, and the success rate and the efficiency of the release of the cannonball for artificial precipitation 2 are improved.

Furthermore, in this embodiment, the wing surfaces 7 are equipped with three surfaces, and three wing surfaces 7 have the same structure and located on the both sides and on the top side of the cylinder 3 respectively. The wing surfaces 7 on the two sides are horizontal wings and are symmetrically arranged on the two sides of the cylinder 3, and the top wing surface 7 is a vertical wing.

As shown in fig. 3, the three wing surfaces 7 have the same structure, the cylinder 3 is a cuboid structure formed by the bonding of several cylinders together, and the plurality of cannonballs for artificial precipitation 2 are respectively arranged in the plurality of cylinders 3 so as to space the plurality of cannonballs for artificial precipitation 2 apart from each other, thereby ensuring that the other cannonball for artificial precipitation 2 can be detonated normally under the condition that one cannonball for artificial precipitation 2 fails to be detonated (such as being damaged by moisture). Of course, the cylinder 3 can be set to be a rectangular structure with a rectangular cross section and coated on the outer side of the cannonball for artificial precipitation 2, so as to fix and stabilize the cannonball for artificial precipitation 2 and provide a carrier for connecting and arranging the wing surface 7, the first sensor 6 and the soft lock 4. Three wing surfaces 7 are set on the one end at the cylinder 3, this is convenient for adjusting the gesture and the stability of the cannonball for artificial precipitation 2 and to improve the accurate input, the input efficiency and input success rate.

Moreover, the wing surface 7 and the cylinder body 3 is rotationally connected.

In some embodiment, the wing surface 7 is connected to the cylinder 3 through a rotating shaft, so that the rotation control of the wing surface 7 is realized, and when the wing surface 7 rotates within a certain range, the posture of the cannonball for artificial precipitation 2 can be adjusted, so that accurate throwing is achieved. In a cloud system, the stability of the cannonball for artificial precipitation 2 can be stabilized by adjusting the wing surface 7, and the rainfall catalysis is ensured to be realized.

Further, the unmanned aerial vehicle 1 further comprises a controller, which is not shown in the figure, the controller is configured to control the rotation of the wing surface 7, and the first sensor 6 is arranged in the middle of the long shaft direction of the cylinder 3 and connected with the controller.

It should be noted that, in this embodiment, the controller is provided with the wireless transceiver. Therefore the controller can be located on ground. Through the wireless communication mode, when the controller is located on the cylinder 3, it is convenient for the unmanned aerial vehicle 1 to implement reliable control through wired mode, and can transmit the releasing gesture of cylinder 3 to unmanned aerial vehicle 1 through wireless mode, and it is convenient to realize the monitoring and the control of the cannonball for artificial precipitation 2. The first sensor 6 is connected to the controller and used for sending the real-time position information of the cannonball for artificial precipitation 2 to the controller, and data interaction is carried out between the controller and the ground monitoring room, so that the position of the cannonball for artificial precipitation 2 and the position of the cloud system can be compared and matched conveniently, and the accurate control on throwing and detonation of the cannonball for artificial precipitation 2 can be achieved. Furthermore, a second sensor 5 is arranged at one end of the soft lock 4 connected with the cannonball for artificial precipitation 2, and the second sensor 5 is connected with the controller to send the position information of the tail end of the soft lock 4 to the controller. The first sensor 6 is a radar sensor
and/or the second sensor 5 is a radar sensor.

The radar sensor has stable detection capability under extreme weather conditions, and it is widely used in aviation field. In this embodiment, the function of first sensor 6 and the second sensor 5 is to locate and feedback the position of the end of the soft lock 4 and the cannonball for artificial precipitation 2 in real time, therefore, other sensors used for positioning and feedback in the prior art can also be selected, such as locator and navigator and so on. The first sensor 6 and the second sensor 5 can be respectively different sensors.

The first sensor 6 and the second sensor 5 can be directly connected with the ground monitoring room by wireless mode. The ground monitoring room can directly receive the position signal of the first sensor 6 and/ or the second sensor 5,
it can ensure that the position signal can still be received when the controller on cylinder 3 or unmanned aerial vehicle 1 fails. It still compares the position signal with the cloud system position measured in advance and combines with the release and detonation time of the cannonball for artificial precipitation 2, the timing of the soft lock 4 releasing the cannonball for artificial precipitation 2 can be controlled to achieve precise control and ensure rainfall effect.

Moreover, the first sensor 6 and the second sensor 5 are connected and communicated through a wired cable.

It should be explained that, connecting the first sensor 6 and the second sensor 5 for communication, then sending the signals of the two sensors to the ground monitoring room through the second sensor 5 ensures the accuracy and integrity of signals received by the ground monitoring room. It can be understood that there may be lightning above the cloud system at any time, which will affect the normal operation of radar sensors and signal transmission. The positions of the first sensor 6 and the second sensor 5 are the closest, so the signal from the first sensor 6 can be received in time and feedback to the ground monitoring room. It is convenient for the staff in the ground monitoring room to send the detonation control signal to the cannonball for artificial precipitation 2 and achieve precise delivery and detonation

Moreover, the soft lock 4 is provided with multiple soft locks 4. The two ends of multiple soft locks 4 are respectively connected to the interval position on the unmanned aerial vehicle 1 and the interval position on the cannonball for artificial precipitation 2.

In this embodiment, when multiple cannonballs for artificial precipitation 2 are carried on the unmanned aerial vehicle 1 at the same time, each cannonball for artificial precipitation 2 is connected through soft lock 4 to control each cannonball for artificial precipitation 2 separately. For one cannonball for artificial precipitation 2, more than two soft locks 4 can also be used to connect it, so as to ensure the release attitude of the cannonball for artificial precipitation 2 and ensure the detonating effect. In some embodiment, the attitude and stability of the cannonball for artificial precipitation 2 can be adjusted to improve the delivery accuracy by adjusting the length of multiple soft locks 4 and cooperating with the wing surface 7 on the cylinder 3.

Moreover the first sensor 6 is provided with multiple first sensors 6. Multiple first sensors 6 are spaced on the cannonball for artificial precipitation 2.

In this embodiment, considering the release attitude of the cannonball for artificial precipitation 2, it can be positioned by multiple first sensors 6 for attitude adjustment. More than two first sensors 6 can be used as a backup. If one of the first sensors 6 fails, it can ensure that there are other first sensors 6 to send position signals to the ground monitoring room or controller.

Furthermore the unmanned aerial vehicle 1 is vertical takeoff and landing unmanned aerial vehicle.

Furthermore the fixed wing vertical takeoff and landing unmanned aerial vehicle is selected as the large load capacity and long endurance time, less energy consumption. In combination with the positioning detection of the first sensor 6 and the second sensor 5 in the invention, rapid and accurate release of the cannonball for artificial precipitation 2 can be achieved.

Moreover the system to install the cannonball for artificial precipitation to the unmanned aerial vehicle further comprises an image collector (not shown in the figure), the image collector is set on the unmanned aerial vehicle 1 or the cylinder 3, and is connected with the controller.

The system to install the cannonball for artificial precipitation to the unmanned aerial vehicle in the invention is used to detect the cloud system position by radar in advance, and the unmanned aerial vehicle 1 is designed to attach cannonball for artificial precipitation 2 to release cannonball for artificial precipitation 2 when flying to the sky above the cloud system. It can be understood that the cloud system is dynamically changing. It is necessary to monitor the distribution of cloud system in real time to control the flight path of unmanned aerial vehicle 1, so as to achieve the purpose of effective rainfall. An image collector is set on the unmanned aerial vehicle 1, which can take pictures of the cloud system below the unmanned aerial vehicle 1 and transmit them to the controller or ground monitoring room (the controller is set on the ground) to judge whether the cloud system needs to release the cannonball for artificial precipitation 2. It can be understood that the image collector can monitor the position and status of the cloud system in real time, so as to apply a flexible delivery solution in real time.

It can be understood that, it has better maneuverability and flexibility when the image collector is set on the unmanned aerial vehicle 1 the controller is set on the ground. Wireless connection is used for signal transmission and the signal is stable. It is not affected by the change of unmanned aerial vehicle 1 flight route.

Moreover, the image collector is a camera.

As a solution, the unmanned aerial vehicle 1 is provided with a camera as an image collector, the camera shot image is transmitted to the ground controller in real time. It is convenient for the ground to analyze and judge the real-time state of the cloud system, to determine whether the cannonball for artificial precipitation 2 is put in delivery position and so on. Specifically, the camera can be directly communicated with the ground controller, also can be transmitted together with other sensor signal on the unmanned aerial vehicle 1.

Obviously, the above embodiment of the present invention are only for the sake of clarity of illustration, and not the limitation of the embodiment of the present invention. For those of ordinary skill in the art, various obvious changes can be made, insofar as they fall within the scope of the appended claims.

## Claims

1. A system to install a cannonball for artificial precipitation to an unmanned aerial vehicle, comprising:
the unmanned aerial vehicle (1),
the cannonball for artificial precipitation (2),
a cylinder (3),
a soft lock (4), and
a first sensor (6),
wherein the unmanned aerial vehicle (1) connects the cannonball for artificial precipitation (2) through the soft lock (4) of adjustable length,
the cannonball for artificial precipitation (2) is a plurality of cannonballs for artificial precipitation, the cylinder (3) is a plurality of cylinders, and the plurality of cannonballs for artificial precipitation (2) are respectively provided inside the plurality of cylinders (3),
the first sensor (6) configured to provide a position signal of the cannonball for artificial precipitation in real-time, is arranged at the cylinder (3),
an outer side of the cylinder (3) is provided with a wing surface (7), the wing surface (7) is multiple,
and wherein the wing surface (7) is arranged on one end of a long shaft direction of the cylinder (3),
the soft lock (4) connects on the other end of the long shaft direction of the cylinder (3).

2. The system to install the cannonball for artificial precipitation to the unmanned aerial vehicle according to Claim 1, wherein the wing surface (7) is three wing surfaces (7), which have the same structure and are respectively arranged on both sides and the top of the cylinder (3).

3. The system to install the cannonball for artificial precipitation to the unmanned aerial vehicle according to Claim 2, which is **characterized in that** the wing surfaces on both sides (7) are horizontal wing and symmetrically disposed on the two sides of the cylinder (3), the top wing surface (7) is a vertical wing.

4. The system to install the cannonball for artificial precipitation to the unmanned aerial vehicle according to Claim 1, wherein the wing surface (7) and the cylinder (3) are rotatably connected.

5. The system to install the cannonball for artificial precipitation to the unmanned aerial vehicle according to Claim 1, which further comprises a controller, the controller is configured to control the rotation of the wing surface (7), the first sensor (6) is set on the middle position of the long shaft direction of the cylinder (3) and is connected with the controller.

6. The system to install the cannonball for artificial precipitation to the unmanned aerial vehicle according to Claim 5, which further includes a second sensor (5), which is arranged at one end of the soft lock (4) connected with the cannonball for artificial precipitation (2), and the second sensor (5) is connected to the controller configured to send a position information of the one end of the soft lock (4) to the controller.

7. The system to install the cannonball for artificial precipitation to the unmanned aerial vehicle according to Claim 6, wherein the first sensor (6) is a radar sensor, and/or the second sensor (5) is a radar sensor.

8. The system to install the cannonball for artificial precipitation to the unmanned aerial vehicle according to Claim 1, wherein the unmanned aerial vehicle (1) is a vertical takeoff and landing unmanned aerial vehicle.

9. The system to install the cannonball for artificial precipitation to the unmanned aerial vehicle according to Claim 5, further comprising an image collector, which is set on the cylinder (3) or on the unmanned aerial vehicle (1), the image collector is connected to the controller.

10. The system to install the cannonball for artificial precipitation to the unmanned aerial vehicle according to Claim 5, wherein the controller is arranged on the ground, on the unmanned aerial vehicle (1) or on the cylinder (3), and the controller is equipped with a wireless transceiver.

11. The system to install the cannonball for artificial precipitation to the unmanned aerial vehicle according to Claim 1, which is **characterized in that** the first sensor (6) is a radar sensor.

## Patentansprüche

1. System zum Installieren einer Kanonenkugel für künstlichen Niederschlag an einem unbemannten Luftfahrzeug, umfassend:
das unbemannte Luftfahrzeug (1),
die Kanonenkugel für künstlichen Niederschlag (2),
einen Zylinder (3),
eine weiche Verriegelung (4) und
einen ersten Sensor (6),
wobei das unbemannte Luftfahrzeug (1) die Kanonenkugel für künstlichen Niederschlag (2) durch die weiche Verriegelung (4) mit einstellbarer Länge verbindet,
die Kanonenkugel für künstlichen Niederschlag (2) eine Vielzahl von Kanonenkugeln für künstlichen Niederschlag ist, der Zylinder (3) eine Vielzahl von Zylindern ist und die Vielzahl von Kanonenkugeln für künstlichen Niederschlag (2) jeweils innerhalb der Vielzahl von Zylindern (3) vorgesehen sind,
der erste Sensor (6), der konfiguriert ist, um ein Positionssignal der Kanonenkugel für künstlichen Niederschlag in Echtzeit bereitzustellen, an dem Zylinder (3) angeordnet ist,
eine Außenseite des Zylinders (3) mit einer Flügelfläche (7) versehen ist, die Flügelfläche (7) mehrfach ist, und wobei die Flügelfläche (7) an einem Ende einer langen Wellenrichtung des Zylinders (3) angeordnet ist, die weiche Verriegelung (4) an dem anderen Ende der langen Wellenrichtung des Zylinders (3) verbindet.

2. System zum Installieren der Kanonenkugel für künstlichen Niederschlag an dem unbemannten Luftfahrzeug nach Anspruch 1, wobei die Flügelfläche (7) drei Flügelflächen (7) ist, die die gleiche Struktur aufweisen und jeweils an beiden Seiten und der Oberseite des Zylinders (3) angeordnet sind.

3. System zum Installieren der Kanonenkugel für künstlichen Niederschlag an dem unbemannten Luftfahrzeug nach Anspruch 2, das **dadurch gekennzeichnet ist, dass** die Flügelflächen an beiden Seiten (7) horizontale Flügel sind und symmetrisch an den zwei Seiten des Zylinders (3) angeordnet sind, die obere Flügelfläche (7) ein vertikaler Flügel ist.

4. System zum Installieren der Kanonenkugel für künstlichen Niederschlag an dem unbemannten Luftfahrzeug nach Anspruch 1, wobei die Flügelfläche (7) und der Zylinder (3) drehbar verbunden sind.

5. System zum Installieren der Kanonenkugel für künstlichen Niederschlag an dem unbemannten Luftfahrzeug nach Anspruch 1, das ferner eine Steuerung umfasst, wobei die Steuerung konfiguriert ist, um die Drehung der Flügelfläche (7) zu steuern, der erste Sensor (6) auf die mittlere Position der langen Wellenrichtung des Zylinders (3) eingestellt ist und mit der Steuerung verbunden ist.

6. System zum Installieren der Kanonenkugel für künstlichen Niederschlag an dem unbemannten Luftfahrzeug nach Anspruch 5, das ferner einen zweiten Sensor (5) beinhaltet, der an einem Ende der weichen Verriegelung (4) angeordnet ist, die mit der Kanonenkugel für künstlichen Niederschlag (2) verbunden ist, und der zweite Sensor (5) mit der Steuerung verbunden ist, die konfiguriert ist, um eine Positionsinformation des einen Endes der weichen Verriegelung (4) an die Steuerung zu senden.

7. System zum Installieren der Kanonenkugel für künstlichen Niederschlag an dem unbemannten Luftfahrzeug nach Anspruch 6, wobei der erste Sensor (6) ein Radarsensor ist und/oder der zweite Sensor (5) ein Radarsensor ist.

8. System zum Installieren der Kanonenkugel für künstlichen Niederschlag an dem unbemannten Luftfahrzeug nach Anspruch 1, wobei das unbemannte Luftfahrzeug (1) ein unbemanntes Senkrechtstart- und Landeluftfahrzeug ist.

9. System zum Installieren der Kanonenkugel für künstlichen Niederschlag an dem unbemannten Luftfahrzeug nach Anspruch 5, ferner umfassend einen Bildsammler, der an dem Zylinder (3) oder an dem unbemannten Luftfahrzeug (1) angebracht ist, wobei der Bildsammler mit der Steuerung verbunden ist.

10. System zum Installieren der Kanonenkugel für künstlichen Niederschlag an dem unbemannten Luftfahrzeug nach Anspruch 5, wobei die Steuerung am Boden, an dem unbemannten Luftfahrzeug (1) oder an dem Zylinder (3) angeordnet ist und die Steuerung mit einem drahtlosen Transceiver ausgestattet ist.

11. System zum Installieren der Kanonenkugel für künstlichen Niederschlag an dem unbemannten Luftfahrzeug nach Anspruch 1, das **dadurch gekennzeichnet ist, dass** der erste Sensor (6) ein Radarsensor ist.

## Revendications

1. Système pour installer une boule de canon pour des précipitations artificielles sur un véhicule aérien sans pilote, comprenant :
le véhicule aérien sans pilote (1),
la boule de canon pour des précipitations artificielles (2),
un cylindre (3),
un verrou souple (4), et
un premier capteur (6),
dans lequel le véhicule aérien sans pilote (1) relie la boule de canon pour des précipitations artificielles (2) par l'intermédiaire du verrou souple (4) de longueur réglable,
la boule de canon pour des précipitations artificielles (2) est une pluralité de boules de canon pour des précipitations artificielles, le cylindre (3) est une pluralité de cylindres, la pluralité de boules de canon pour des précipitations artificielles (2) sont respectivement à l'intérieur de la pluralité de cylindres (3),
le premier capteur (6) configuré pour fournir un signal de position de la boule de canon pour des précipitations artificielles en temps réel, est agencé au niveau du cylindre (3),
un côté extérieur du cylindre (3) est pourvu d'une surface d'aile (7), la surface d'aile (7) est multiple, et
dans lequel la surface d'aile (7) est agencée sur une extrémité d'une direction d'arbre long du cylindre (3), le verrou souple (4) se relie sur l'autre extrémité de la direction d'arbre long du cylindre (3).

2. Système pour installer la boule de canon pour des précipitations artificielles sur le véhicule aérien sans pilote selon la revendication 1, dans lequel la surface d'aile (7) est trois surfaces d'aile (7), qui ont la même structure et sont respectivement agencées sur les deux côtés et le haut du cylindre (3).

3. Système pour installer la boule de canon pour des précipitations artificielles sur le véhicule aérien sans pilote selon la revendication 2, qui est **caractérisé en ce que** les surfaces d'aile sur les deux côtés (7) sont une aile horizontale et disposées symétriquement sur les deux côtés du cylindre (3), la surface d'aile supérieure (7) est une aile verticale.

4. Système pour installer la boule de canon pour des précipitations artificielles sur le véhicule aérien sans pilote selon la revendication 1, dans lequel la surface d'aile (7) et le cylindre (3) sont reliés en rotation.

5. Système pour installer la boule de canon pour des précipitations artificielles sur le véhicule aérien sans pilote selon la revendication 1, qui comprend en outre un dispositif de commande, le dispositif de commande est configuré pour commander la rotation de la surface d'aile (7), le premier capteur (6) est réglé sur la position centrale de la direction d'arbre long du cylindre (3) et est relié au dispositif de commande.

6. Système pour installer la boule de canon pour des précipitations artificielles sur le véhicule aérien sans pilote selon la revendication 5, qui comprend en outre un second capteur (5), qui est agencé au niveau d'une extrémité du verrou souple (4) relié à la boule de canon pour des précipitations artificielles (2), et le second capteur (5) est relié au dispositif de commande configuré pour envoyer une information de position de l'une extrémité du verrou souple (4) au dispositif de commande.

7. Système pour installer la boule de canon pour des précipitations artificielles sur le véhicule aérien sans pilote selon la revendication 6, dans lequel le premier capteur (6) est un capteur radar, et/ou le second capteur (5) est un capteur radar.

8. Système pour installer la boule de canon pour des précipitations artificielles sur le véhicule aérien sans pilote selon la revendication 1, dans lequel le véhicule aérien sans pilote (1) est un véhicule aérien sans pilote à décollage et atterrissage verticaux.

9. Système pour installer la boule de canon pour des précipitations artificielles sur le véhicule aérien sans pilote selon la revendication 5, comprenant en outre un collecteur d'image, qui est placé sur le cylindre (3) ou sur le véhicule aérien sans pilote (1), le collecteur d'image est connecté au dispositif de commande.

10. Système pour installer la boule de canon pour des précipitations artificielles sur le véhicule aérien sans pilote selon la revendication 5, dans lequel le dispositif de commande est agencé sur le sol, sur le véhicule aérien sans pilote (1) ou sur le cylindre (3), et le dispositif de commande est équipé d'un émetteur- récepteur sans fil.

11. Système pour installer la boule de canon pour des précipitations artificielles sur le véhicule aérien sans pilote selon la revendication 1, qui est **caractérisé en ce que** le premier capteur (6) est un capteur radar.
